# EUROPEAN PATENT APPLICATION

(11) **EP 3 889 934 A1**
(43) Date of publication of application: **06.10.2021**
(21) Application number: 19890151.4
(22) Date of filing: 30.10.2019
(51) Int. Cl.: G08B 25/00, G08B 17/00, H04Q 9/00

(54) **MANAGEMENT SYSTEM, MANAGEMENT METHOD, AND PROGRAM**

(30) Priority: 30.11.2018 JP 2018226079
(71) Applicant: Panasonic Intellectual Property Management Co., Ltd., Osaka-shi, Osaka 540-6207 (JP)
(72) Inventor: TAKAHASHI, Hideaki, Osaka-shi, Osaka 540-6207 (JP); CHINZAKA, Mai, Osaka-shi, Osaka 540-6207 (JP); TANAKA, Keiichi, Osaka-shi, Osaka 540-6207 (JP)
(74) Representative: Appelt, Christian W.
(86) International application number: PCT/JP2019/042455
(87) International publication number: WO 2020/110570

(57) **Abstract**

An object of the present disclosure is to make usability improvable. A management system (1) includes an acquirer (111) and an outputter (114). The acquirer (111) is configured to acquire, from a plurality of sensors (20) installed in respective installation locations (LI), respective pieces of sensor information regarding operation modes of the sensors (20). The outputter (114) is configured to output at least one piece of output target sensor information to each of output destination terminals. The at least one piece of output target sensor information includes at least one piece of sensor information selected, from the pieces of sensor information acquired by the acquirer (111), for each of the output destination terminals in accordance with contents of the pieces of sensor information. The outputter (114) is configured to output the at least one piece of output target sensor information in association with at least one of identification information or location information. The identification information is identification information of at least one of the sensors (20) from which the at least one piece of output target sensor information is acquired. The location information is location information regarding the installation location of the at least one of the sensors (20) from which the at least one piece of output target sensor information is acquired.

## Description

### Technical Field

The present disclosure relates to management systems, management methods, and programs. More specifically, the present disclosure relates to a management system, a management method, and a program for managing operation modes of a plurality of sensors.

### Background Art

Patent Literature 1 discloses a known fire alarm (detector). The fire alarm includes an alarm unit configured to issue an alert by a sound or voice when the alarm unit detects that a counted operating time of the fire alarm reaches a time for replacement of the fire alarm.

In the fire alarm disclosed in Patent Literature 1, the alarm unit issues an alert when the operation time of the fire alarm reaches the time for replacement, that is, the alarm unit outputs only one piece of information (sensor information) that the operation time reaches the time for replacement. Thus, in the fire detector of the Patent Literature 1, the operational mode of the fire alarm cannot be grasped until the operation time reaches the time for replacement, and the fire detector thus has poor usability.

### Citation List

### Patent Literature

Patent Literature 1: JP 2015-87883 A

### Summary of Invention

It is an object of the present disclosure to provide a management system, a management method, and a program which are configured to improve usability.

A management system of one aspect of the present disclosure includes an acquirer and an outputter. The acquirer is configured to acquire, from a plurality of sensors installed in respective installation locations, respective pieces of sensor information regarding operation modes thereof. The outputter is configured to output at least one of the pieces of sensor information acquired by the acquirer to a plurality of output destination terminals. The outputter is configured to output at least one piece of output target sensor information to each of the plurality of output destination terminals. The at least one piece of output target sensor information includes at least one piece of sensor information selected, from the pieces of sensor information acquired by the acquirer, for each of the plurality of output destination terminals in accordance with contents of the pieces of sensor information. The outputter is configured to output the at least one piece of output target sensor information in association with at least one of identification information or location information. The identification information is identification information of at least one of the sensors from which the at least one piece of output target sensor information is acquired. The location information is location information regarding the installation location of the at least one of the sensors from which the at least one piece of output target sensor information is acquired.

A management method of one aspect of the present disclosure includes an acquisition process and an output process. The acquisition process includes acquiring, from a plurality of sensors installed in respective installation locations, respective pieces of sensor information regarding operation modes thereof. The output process includes outputting at least one of the pieces of sensor information acquired in the acquisition process to a plurality of output destination terminals. The output process includes outputting at least one piece of output target sensor information to each of the plurality of output destination terminals. The at least one piece of output target sensor information includes at least one piece of sensor information selected, from the pieces of sensor information acquired in the acquisition process, for each of the plurality of output destination terminals in accordance with contents of the pieces of sensor information. The output process is configured to output the at least one piece of output target sensor information in association with at least one of identification information or location information. The identification information is identification information of at least one of the sensors from which the at least one piece of output target sensor information is acquired. The location information is location information regarding the installation location of the at least one of the sensors from which the at least one piece of output target sensor information is acquired.

A program of one aspect of the present disclosure is a program configured to cause a computer system to execute an acquisition process and an output process. The acquisition process includes acquiring, from a plurality of sensors installed in respective installation locations, respective pieces of sensor information regarding operation modes thereof. The output process includes outputting at least one piece of output target sensor information to each of the plurality of output destination terminals. The at least one piece of output target sensor information includes at least one piece of sensor information selected, from the pieces of sensor information acquired in the acquisition process, for each of the plurality of output destination terminals in accordance with contents of the pieces of sensor information. The output process is configured to output the at least one piece of output target sensor information in association with at least one of identification information or location information. The identification information is identification information of at least one of the sensors from which the at least one piece of output target sensor information is acquired. The location information is location information regarding the installation location of the at least one of the sensors from which the at least one piece of output target sensor information is acquired.

### Brief Description of Drawings

FIG. 1 is a block diagram illustrating an overall system including a management system according to an embodiment of the present disclosure;
FIG. 2 is a block diagram illustrating a sensor which is a management target of the management system;
FIG. 3 is a block diagram illustrating a first terminal used for the management system;
FIG. 4 is a block diagram illustrating a second terminal used for the management system; and
FIG. 5 is a sequence diagram illustrating operation of the management system.

### Description of Embodiments

The embodiment described below is a mere example of various embodiments of the present disclosure. The embodiment of the present disclosure is not limited to the embodiment described below but may include embodiments other than the embodiment described below. Various modifications may be made to the embodiment described below depending on design, and the like without departing from the technical idea of the present disclosure.

### (Embodiment)

### (1) Schema

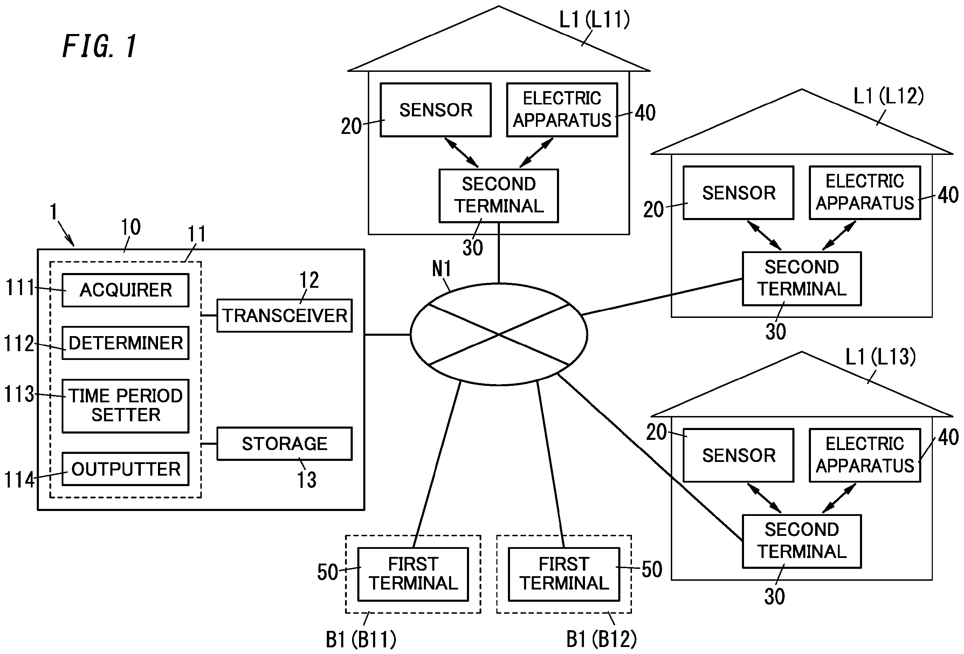

As illustrated in FIG. 1, a management system 1 of the present embodiment is a system for managing operation modes of a plurality of sensors 20 installed in respective installation locations L1.

The management system 1 includes an acquirer 111 and an outputter 114.

The acquirer 111 acquires pieces of sensor information regarding the operation modes of the plurality of sensors 20 installed in the respective installation locations L1.

The outputter 114 outputs at least one piece of the pieces of sensor information acquired by the acquirer 111 to a plurality of output destination terminals (in the following embodiment, first terminals 50 and second terminals 30). The outputter 114 outputs the at least one piece of output target sensor information to each of the plurality of output destination terminals. The at least one piece of output target sensor information includes at least one piece of sensor information selected, from the pieces of sensor information acquired by the acquirer 111, for each of the plurality of output destination terminals in accordance with contents of the pieces of sensor information. The outputter 114 outputs the at least one piece of output target sensor information in association with at least one of identification information or location information. The identification information is identification information of at least one of the sensors 20 from which the at least one piece of output target sensor information is acquired. The location information is location information regarding the installation location L1 of the at least one of the sensors 20 from which the at least one piece of output target sensor information is acquired.

In this embodiment, each of the installation locations L1 is a facility in which the sensor 20 is installed. Each of the installation locations L1 described in the following embodiment is, for example, a detached house. Note that each of the installation locations L1 is not limited to the detached house but may be a dwelling unit of a multiple dwelling complex. Moreover, the installation location L1 is not limited to a dwelling facility but may be a non-dwelling facility such as an office building, a commercial building, a public facility, or a factory. Note that in the following description, the plurality of installation locations L1 may be denoted by installation locations L11, L12, and L13 when they are distinguished from one another.

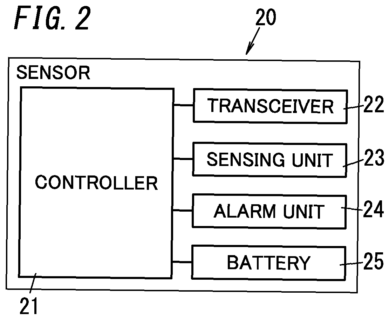

Each sensor 20 is installed in a corresponding one installation locations L1 of the plurality of installation locations L1 and is configured to sense the physical quantity of a sensing target. Each sensor 20 outputs sensor information regarding an operation mode thereof to the acquirer 111. In this embodiment, the sensor information includes at least one of information regarding a sensing result by the sensor 20 or information (hereinafter referred to as maintenance-related information) used for maintenance work to be performed on the sensor 20. The maintenance-related information includes first information indicating whether or not an abnormality is present in the sensor 20 and second information regarding signs of the abnormality. The first information includes at least one of information indicating exhaustion of a battery 25 (see FIG. 2) which is a power supply of the sensor 20, information indicating the total hours of use of the sensor 20 reaching the expiration date for use, or information (e.g., an error code) indicating abnormality contents of various types of abnormalities present in the sensor 20. The second information is information regarding signs leading to the occurrence of the abnormality and includes, for example, at least one of information regarding the total ours of use of the sensor 20, information regarding the battery voltage of the battery 25, or a code number indicating the occurrence of an event resulting in the abnormality. Moreover, unique identification information (e.g., a MAC address or an address assigned to each sensor 20 by the management system 1) is assigned to each sensor 20.

In the present embodiment, the output destination terminals, to which the pieces of sensor information are output from the management system 1, include the first terminals 50 and the second terminals 30.

Each first terminal 50 is, for example, a terminal of a business operator B1 which conducts business relating to the plurality of sensors 20 installed in the respective installation locations L1. When a plurality of business operators B11 and B12 exist, each of the plurality of business operators B11 and B12 includes a first terminal 50 used by a person in charge of a corresponding one of the plurality of business operators. In this embodiment, the plurality of business operators B11 and B12 are, for example, maintenance service business operators which provide maintenance work to the sensors 20, sales business operators which conduct sales business of selling items that replace the sensors 20, or house-builders which construct or renovate the facilities of the installation locations L1. The following description explains an example in which the business operator B1 is a maintenance service business operator which provides maintenance work to the sensors 20.

The second terminals 30 are installed in, for example, the respective installation locations L1. The second terminal 30 is used by a facility user (e.g., a resident) who uses the facility of the installation location L1 in which the second terminal 30 is installed.

The outputter 114 selects, from the pieces of sensor information acquired from the plurality of sensors 20 by the acquirer 111, at least one piece of output target sensor information for each of the output destination terminals in accordance with contents of the pieces of sensor information and outputs the at least one piece of output target sensor information to the corresponding one (in the embodiment, the first terminal 50 or the second terminal 30) of the output destination terminals. The sensor information includes information used by only a person in charge of the business operator 50 which uses the first terminal 50 and information used by both the person in charge of the business operator 50 which uses the first terminal 50 and a facility user who uses the second terminal 30. The sensor information may further include information used by only the facility user who uses the second terminal 30.

As described above, users of the plurality of output destination terminals use different pieces of sensor information. Therefore, the outputter 114 selects, from the pieces of sensor information acquired from the plurality of sensors 20 by the acquirer 111, at least one piece of output target sensor information for each of the output destination terminals in accordance with contents of the pieces of sensor information. The outputter 114 then associates the at least one piece of output target sensor information selected for each of the output destination terminals with at least one of the identification information or the location information and outputs the at least one piece of output target sensor information to each of the output destination terminals. Thus, the outputter 114 can provide, to each of the plurality of output destination terminals, the at least one sensor information required by each of users who uses a corresponding one of the output destination terminals (a person in charge of the business operator B1 or a facility user who uses the installation location L1). Each user who uses the corresponding one of the output destination terminals can verify, based on the at least one piece of output target sensor information and at least one of the identification information or the location information output from the management system 1, the operational mode and the identification information or the location information of the sensor 20 from which the at least one piece of output target sensor information is acquired. Thus, the present embodiment can provide the management system 1 configured to manage the operational modes of the plurality of sensors 20 and therefore, the usability of the management system 1 can be improved.

In the following embodiment, the outputter 114 outputs the at least one piece of output target sensor information in association with the identification information and the location information to the output destination terminal. However, the outputter 114 may output the at least one piece of output target sensor information in association with only one of the identification information and the location information to the output destination terminal.

### (2) Details

An overall system including the management system 1 according to the present embodiment will be described below with reference to FIGS. 1 to 4.

The management system 1 manages the operation modes of the sensors 20 installed in the installation locations L1 (L11 to L13). The second terminals 30 to which the outputter 114 outputs the pieces of output target sensor information are installed in the installation locations L1. Each second terminal 30 also has a function as a relay that relays communication between the management system 1 and the sensor 20. Configurations of components in the overall system including the management system 1 will be described below.

### (2.1) Sensor

The sensor 20 is installed in the installation location L1 and detects the physical quantity of a sensing target in the installation location L1. In the present embodiment, the sensor 20 detects, for example, the presence of an event which is to be a target of disaster protection. The sensor 20 is installed on, for example, an upper part of a ceiling or a wall of a room in the facility which is the installation location L1. The sensor 20 of the present embodiment is, for example, a fire alarm having a sensing function of sensing an outbreak of a fire as the event which is the target of the disaster protection and an alert function of issuing an alert when the sensor 20 senses the outbreak of the fire. The sensor 20 outputs, for example, a sound such as an alarm sound when a fire breaks out. However, the event which is the target of the disaster protection is not limited to the fire but may be water damage, earthquake, or the like. Moreover, the event which is the target of the disaster protection may be a gas leakage or generation of carbon monoxide (CO) resulting from incomplete combustion.

As illustrated in FIG. 2, the sensor 20 includes a controller 21, a transceiver 22, a sensing unit 23, an alarm unit 24, and the battery 25.

The controller 21 includes, for example, a computer system including a processor and memory. The processor executes a program stored in the memory, and thereby, the computer system functions as the controller 21. The program to be executed by the processor is stored in the memory of the computer system in advance in this embodiment but may be provided by a recording medium such as a memory card storing the program or may be provided over a telecommunications network such as the Internet. Note that the controller 21 has memory in which identification information assigned to the sensor 20 is stored.

The transceiver 22 includes a communication interface for wireless communication with the second terminal 30 installed in the installation location L1. In this embodiment, a communication scheme between the transceiver 22 and the second terminal 30 is, for example, wireless communication by using, as a medium, a radio wave compliant with a communication standard of a 920-MHz-band specified low power radio station (a wireless station not requiring a license), Wi-Fi (registered trademark), Bluetooth (registered trademark), or the like.

The sensing unit 23 detects information regarding a fire which is an event as the sensing target. The sensing unit 23 is, for example, a photoelectric sensor which senses smoke. Thus, the information regarding the fire includes, for example, information regarding smoke. However, the sensing unit 23 is not limited to the photoelectric sensor but may be, for example, an isothermal sensor which senses heat.

When the sensor 20 detects the presence of a fire, the alarm unit 24 alerts to the presence of the fire by, for example, a sound. The alarm unit 24 includes a loudspeaker configured to output a sound (voice). When the sensor 20 detects the presence of a fire, the alarm unit 24 outputs, from the loudspeaker, at least one of an alarm sound or a voice message for alerting to the presence of the fire. Note that the alarm unit 24 may alert to the presence of the fire by light. For example, the alarm unit 24 includes a light source such as a light-emitting diode, and when the sensor 20 detects a presence of the fire, the alarm unit 24 may light or flash the light source to alert to the presence of the fire. Moreover, the alarm unit 24 may alert the presence of the fire by both the sound and the light.

The battery 25 is, for example, a battery such as a lithium battery. The battery 25 supplies, to the controller 21, the transceiver 22, the sensing unit 23, the alarm unit 24, and the like, electric power required for operation thereof.

Note that one sensor 20 may be installed in one installation location L1, but a plurality of sensors 20 may be installed in one installation location L1. When a plurality of sensors 20 are installed in one installation location L1, the plurality of sensors 20 may be configured, for example, such that one of the plurality of sensors 20 is set as a master and the other sensor(s) 20 of the plurality of sensors 20 except for the master is set as a slave. The plurality of sensors 20 identify transmission destinations and transmission sources based on the pieces of identification information assigned to the respective sensors 20 to perform wireless communication with each other.

For example, when the sensor 20 set as the master detects the presence of a fire, the controller 21 of the sensor 20 set as the master controls the alarm unit 24 to alert to the presence of the fire and transmits a detection signal from the transceiver 22 to the sensor(s) 20 set as the slave. When the transceiver 22 of the sensor 20 set as the slave receives the detection signal from the sensor 20 set as the master, the controller 21 of the sensor 20 set as the slave controls the alarm unit 24 to alert to the presence of the fire.

Moreover, when the sensor 20 set as the slave which is an alert source detects the presence of a fire, the controller 21 of the sensor 20 set as the slave controls the alarm unit 24 to alert to the presence of the fire transmits a detection signal from the transceiver 22 to the sensor 20 set as the master. When the transceiver 22 of the sensor 20 set as the master receives the detection signal from the sensor 20 set as the slave, the controller 21 of the sensor 20 set as the master controls the alarm unit 24 to alert to the presence of the fire, and the controller 21 transmits, from the transceiver 22, the detection signal to the sensor(s) 20 set as the slave other than the alert source. When the transceiver 22 of the sensor(s) 20 set as the slave except for the alert source receives the detection signal from the sensor 20 set as the master, the controller 21 of the sensor(s) 20 set as the slave except for the alert source controls the alarm unit 24 to alert to the presence of the fire.

Thus, when a plurality of sensors 20 are installed in one installation location L1, any one of the plurality of sensors 20 which detects the presence of a fire enables all the plurality of sensors 20 installed in the installation location L1 to alert to the presence of the fire.

Moreover, when the sensor 20 receives, from the management system 1, a request signal for requesting transmission of the sensor information, the sensor 20 generates the sensor information regarding the operation mode of the sensor 20 and transmits the sensor information to the management system 1. Here, when a plurality of sensors 20 are installed in one installation location L1, the sensor 20 set as the master may collect (pieces of) sensor information from the sensor(s) 20 set as the slave. Then, when the sensor 20 set as the master receives the request signal from the management system 1, the sensor 20 set as the master transmits the sensor information of the sensor 20 set as the master and the (pieces of) sensor information of the sensor(s) 20 set as the slave to the management system 1. The sensor 20 set as the master transmits, to the management system 1, the sensor information of the sensor 20 set as the master and the (pieces of) sensor information of the sensor(s) 20 set as the slave in association with the pieces of identification information of the sensors 20 and the location information of the sensor 20 set as the master. In this case, the memory of the sensor 20 set as the master stores at least the location information of the sensor 20 set as the master and the (pieces of) identification information of the sensor(s) 20 set as the slave installed in the same installation location L1 as the sensor 20 set as the master. When the location information includes information indicating a further detailed place such as a room in the installation location L1, the memory of the sensor 20 set as the master may store the (pieces of) location information of the sensor(s) 20 set as the slave in addition to the location information of the sensor 20 set as the master. Note that it is not essential that the sensor 20 set as the master transmits, to the management system 1, the sensor information of the sensor 20 set as the master and the (piece of) sensor information of the sensor(s) 20 set as the slave. Each of the plurality of sensors 20 in one installation location L1 may transmit its sensor information to the management system 1.

### (2.2) Management System

As illustrated in FIG. 1, the management system 1 includes a server 10 operated by a management business operator which manages the plurality of sensors 20 installed in the plurality of installation locations L1.

The server 10 included in the management system 1 includes a controller 11, a transceiver 12, and a storage 13.

The controller 11 includes, for example, a computer system including a processor and memory. The processor executes a program stored in the memory, and thereby, the computer system functions as the controller 11. The program to be executed by the processor is stored in the memory of the computer system in advance in this embodiment but may be provided by a recording medium such as a memory card storing the program or may be provided over a telecommunications network such as the Internet.

The controller 11 has functions of, for example, the acquirer 111, a determiner 112, a time period setter 113, the outputter 114, and the like.

The acquirer 111 is configured to acquire pieces of sensor information regarding the operation modes of the respective sensors 20 installed in the installation locations L1. The acquirer 111 regularly transmits a request signal for requesting the sensor information from the transceiver 12 to the sensor 20 and acquires the sensor information transmitted from the sensor 20 in response to the request signal. Note that the acquirer 111 may transmit the request signal for requesting the sensor information from the transceiver 12 to the sensor 20 by using the occurrence of a prescribed event as a trigger and acquire the sensor information transmitted from the sensor 20 in response to the request signal.

Moreover, in the present embodiment, the acquirer 111 acquires the pieces of sensor information from the plurality of sensors 20 installed in the plurality of installation location L1 via the second terminals 30 which are relays. For example, when the sensor 20 set as the master collects the (pieces of) sensor information from the sensor(s) 20 set as the slave in one installation location L1, the acquirer 111 acquires the sensor information of the sensor 20 set as the master and the (pieces of) sensor information of the sensor(s) 20 set as the slave from the sensor 20 set as the master via the second terminal 30. Note that the acquirer 111 may acquire the pieces of sensor information form the plurality of sensors 20 via the second terminals 30. Moreover, it is not essential that the acquirer 111 acquires the pieces of sensor information from all the plurality of sensors 20 in the one installation location L1 via the relay (the second terminal 30). The acquirer 111 at least acquires the pieces of sensor information via the relay (the second terminal 30) from at least some sensors 20 of the plurality of sensors 20. This has the advantage that each of the plurality of sensors 20 does not have to include a communication interface for communication with the management system 1.

Note that when the sensor 20 includes the communication interface for communication with the management system 1, the management system 1 may acquire the sensor information via direct communication with the sensor 20, and in this case, the relay may be omitted. For example, in one installation location L1, the sensor 20 set as the master collects the (pieces of) sensor information of the sensor(s) 20 set as the slave, and the sensor information of the sensor 20 set as the master transmits, to the management system 1, the (pieces of) sensor information of the sensor(s) 20 set as the slave from the sensor 20 set as the master. Note that it is not essential that the acquirer 111 of the management system 1 acquires, from the sensor 20 set as the master, the pieces of sensor information of the sensor 20 set as the master and the sensor(s) 20 set as the slave, but the acquirer 111 may directly acquire the pieces of sensor information from the plurality of sensors 20 in one installation location L1.

The determiner 112 determines priority degrees of the pieces of sensor information acquired from the plurality of sensors 20 by the acquirer 111. For example, when the sensor information includes information regarding signs of an abnormality, the determiner 112 determines the priority degree in accordance with the level of the abnormality indicated by the signs included in the sensor information. The determiner 112 classifies the degrees of urgency for the pieces of sensor information acquired from the sensors 20 by the acquirer 111 into a plurality of levels and determines the priority degrees of the pieces of sensor information such that a higher priority is given to a higher degree of urgency.

The time period setter 113 sets a countermeasure time period for the sensor information acquired from each of the plurality of sensors 20 by the acquirer 111. In this embodiment, the countermeasure time period is a time period representing an allowable time period between the acquisition of the sensor information from the sensor 20 by the acquirer 111 and a countermeasure provided by a manager who manages the sensor 20 based on the sensor information. For example, when the sensor information is maintenance-related information regarding the maintenance work to be performed on the sensor 20, the countermeasure time period is an allowable time period until the maintenance work based on the sensor information is provided. Thus, the manager who manages the sensor 20 at least provides a countermeasure such as the maintenance work on the sensor 20 before the countermeasure time period elapses.

The outputter 114 selects, from the pieces of sensor information acquired from the plurality of sensors 20 by the acquirer 111, at least one piece of output target sensor information to be output to the output destination terminal (the first terminal 50 or the second terminal 30). The outputter 114 associates the identification information and the location information of the sensor 20 from which the at least one piece of output target sensor information is acquired with the at least one piece of output target sensor information and outputs the at least one output target sensor information to the output destination terminal (the first terminal 50 or the second terminal 30).

The transceiver 12 includes a communication interface compliant with, for example, an Ethernet (registered trademark) communication standard. The transceiver 12 communicates with the first terminal 50 provided to the business operator B1 and the second terminals 30 installed in the respective installation locations L1 via a communication network N1 such as the Internet.

The storage 13 includes a device selected from, for example, read only memory (ROM), random access memory (RAM), electrically erasable programmable read only memory (EEPROM), and the like. The storage 13 stores the pieces of sensor information acquired from the plurality of sensors 20 installed in the respective installation locations L1 in association with pieces of identification information and the pieces of location information of the plurality of sensors 20.

### (2.3) First Terminal

The first terminal 50 is a terminal provided to the business operator B1 which conducts maintenance service business of the sensors 20. The first terminal 50 is a terminal used by a person in charge (e.g., a person in charge who performs maintenance service) of the business operator B1 and is, for example, a smartphone or a terminal of a tablet computer having a communication function.

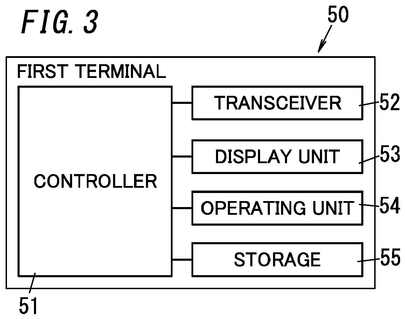

As illustrated in FIG. 3, the first terminal 50 includes a controller 51, a transceiver 52, a display unit 53, an operating unit 54, and a storage 55.

The controller 51 includes, for example, a computer system including a processor and memory. The processor executes a program stored in the memory, and thereby, the computer system functions as the controller 51. The program to be executed by the processor is stored in the memory of the computer system in advance in this embodiment but may be provided by a recording medium such as a memory card storing the program or may be provided over a telecommunications network such as the Internet.

The transceiver 52 includes a communication interface compliant with, for example, an Ethernet (registered trademark) communication standard. The transceiver 52 is connected to the communication network N1 such as the Internet via, for example, a broadband router and communicates with the server 10 of the management system 1 via the broadband router and the communication network N1.

The display unit 53 is a display such as a liquid crystal display. The display unit 53 displays, for example, the at least one piece of output target sensor information provided from the outputter 114 of the management system 1.

The operating unit 54 includes a touch switch provided to the display included in the display unit 53. The operating unit 54 receives an operation given by a person in charge who uses the first terminal 50, and the operating unit 54 outputs, to the controller 51, a signal in response to the operation.

The storage 55 includes a device selected from ROM, RAM, EEPROM, and the like. The storage 55 stores, for example, the at least one piece of output target sensor information provided from the outputter 114 of the management system 1.

### (2.4) Second Terminal

In each of the plurality of installation locations L1, the second terminal 30 is installed. The second terminal 30 is a controller of a home energy management system (HEMS) which manages energy used in the installation location L1 in which the second terminal 30 is installed. The second terminal 30 is used by a facility user who uses the facility in the installation location L1 in which the second terminal 30 is installed. The second terminal 30 also has a function as a relay which relays communication between the management system 1 and the sensor 20 installed in the same installation location L1 as the second terminal 30.

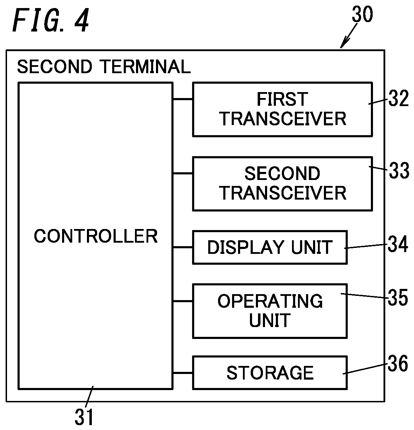

As illustrated in FIG. 4, the second terminal 30 includes a controller 31, a first transceiver 32, a second transceiver 33, a display unit 34, an operating unit 35, and a storage 36.

The controller 31 includes, for example, a computer system including a processor and memory. The processor executes a program stored in the memory, and thereby, the computer system functions as the controller 31. The program to be executed by the processor is stored in the memory of the computer system in advance in this embodiment but may be provided by a recording medium such as a memory card storing the program or may be provided over a telecommunications network such as the Internet.

The first transceiver 32 includes a communication interface for wireless communication with the sensor 20 installed in the installation location L1. The first transceiver 32 performs wireless communication based on the same communication scheme as the transceiver 22 of the sensor 20. When an electric apparatus 40 having a communication function is installed in the installation location L1, the first transceiver 32 can communicate with the electric apparatus 40.

The second transceiver 33 includes a communication interface compliant with, for example, an Ethernet (registered trademark) communication standard. The second transceiver 33 is connected to the communication network N1 such as the Internet via a broadband router installed in the installation location L1. The second transceiver 33 communicates with the server 10 of the management system 1 via the broadband router and the communication network N1.

The display unit 34 is a display such as a liquid crystal display. The display unit 34 displays the sensor information output from the outputter 114 of the management system 1. Moreover, the display unit 34 displays, for example, the amount of energy used in the facility which is the installation location L1.

The operating unit 35 includes a touch switch provided to the display included in the display unit 34. The operating unit 35 receives an operation given by a user (e.g., a facility user who uses the installation location L1) and outputs, to the controller 31, a signal in response to the operation.

The storage 36 includes a device selected from ROM, RAM, EEPROM, and the like. The storage 36 stores location information indicating the installation location L1 in which the second terminal 30 is installed, pieces of identification information of the sensor 20 and the electric apparatus 40 installed in the facility of the same installation location L1 as the second terminal 30, and other information.

### (3) Operation

### (3.1) Registration of Sensor

First, operation of registering the sensor 20 installed in the installation location L1 with the management system 1 will be described.

For example, when the battery 25 is put in the sensor 20 at the time of installation of the sensor 20 in the installation location L1 and the battery 25 starts supplying electric power to the controller 21, the controller 21 operates in a registration mode of registering the sensor 20 with the management system 1.

When the controller 21 of the sensor 20 starts operating in the registration mode, the controller 21 transmits, from the transceiver 22, a radio signal including a registration request for requesting registration with the management system 1 and the identification information of the sensor 20. The radio signal including the registration request and the identification information transmitted from the transceiver 22 of the sensor 20 is received by the second terminal 30 installed in the same installation location L1 as the sensor 20. When the first transceiver 32 of the second terminal 30 receives the radio signal including the registration request and the identification information transmitted from the sensor 20, the controller 31 of the second terminal 30 stores the identification information of the sensor 20 in the storage 36. Moreover, the controller 31 of the second terminal 30 transmits, from the second transceiver 33 via the communication network N1 to the management system 1, a signal including: the registration request received from the sensor 20; the identification information of the sensor 20; and the location information of the installation location L1 in which the sensor 20 is installed. When the transceiver 12 of the management system 1 receives the signal (a signal including the registration request from the sensor 20, and the identification information and the location information of the sensor 20) transmitted from the second terminal 30, the controller 11 registers the sensor 20 as a management target. Specifically, the controller 11 of the management system 1 stores, in the storage 13, the identification information and the location information of the sensor 20 to be registered as the management target.

Thus, the sensor 20 installed in the installation location L1 is registered as the management target with the server 10 of the management system 1.

Note that the above-described method of registering the sensor 20 is a mere example and may accordingly be modified. For example, when the battery 25 is put in the sensor 20 with the operation mode of the second terminal 30 being set to the registration mode by an operation given to the operating unit 35 of the second terminal 30, a process of registering the sensor 20 with the second terminal 30 and the management system 1 may be performed.

Moreover, the location information indicating the installation location of the sensor 20 may be information indicating the place of the facility which is the installation location L1 or information indicating a more detailed place such as a room in the facility which is the installation location L1. For example, when an installation worker registers the sensor 20 with the second terminal 30, the installation worker may input location information specifying a more detailed place in the installation location L1 by using the operating unit 35 of the second terminal 30, and in this case, the location information regarding the place input by using the operating unit 35 is registered with the second terminal 30. The controller 31 of the second terminal 30 transmits the identification information, the location information, and the registration request of the sensor 20 to the management system 1, which enables the sensor 20 to be registered as the management target with the management system 1.

### (3.2) Management Operation of Sensor

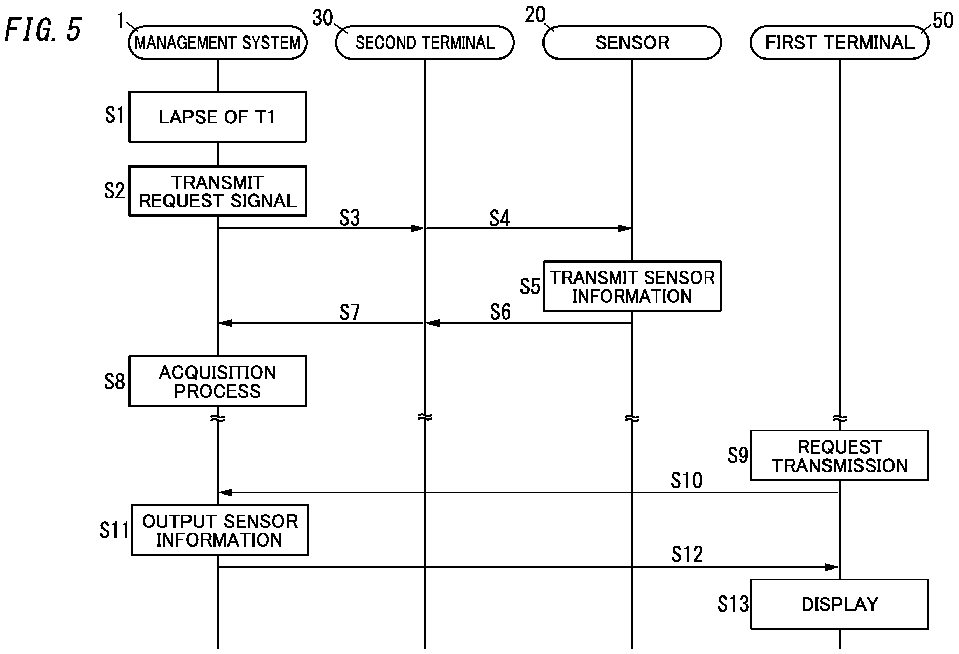

With reference to FIG. 5, a description is given of operation of the management system 1 managing the operational modes of the sensors 20 installed in the installation locations L11, L12, and L13 with the sensors 20 installed in the installation locations L11, L12, and L13 being registered as management targets with the management system 1.

When a period T1 which is predetermined elapses from a time point of previous acquisition of sensor information from each sensor 20 by the acquirer 111 of the management system 1 (S1), the acquirer 111 transmits, from the transceiver 12 to each of the plurality of sensors 20, a request signal for requesting transmission of sensor information (S2). In this embodiment, the request signal transmitted from the transceiver 12 of the management system 1 is received by each sensor 20 as the transmission target via the communication network N1 and each second terminal 30 (S3, S4). That is, the acquirer 111 regularly outputs the request signal for requesting transmission of the sensor information to each of the plurality of sensors 20.

When the transceiver 22 of the sensor 20 as the management target receives the request signal transmitted from the management system 1, the controller 21 of the sensor 20 transmits sensor information regarding the operational mode of the sensor 20 from the transceiver 22 (S5). In this embodiment, the controller 21 generates maintenance-related information (including, for example, first information indicating whether or not an abnormality is present in the sensor 20 and second information regarding signs of the abnormality) relating to the maintenance work on the sensor 20. The controller 21 transmits sensor information including the maintenance-related information from the transceiver 22. The sensor information transmitted from the transceiver 22 of the sensor 20 is input to the management system 1 via the second terminal 30 (S6, S7). When the transceiver 12 of the management system 1 receives the sensor information transmitted from the sensor 20 in response to the request signal, the acquirer 111 associates the sensor information of the sensor 20 received by the transceiver 12 with the identification information and the location information of the sensor 20 and stores the sensor information of the sensor 20 in the storage 13. Thus, the acquirer 111 acquires the sensor information from the sensor 20 as the management target (S8). Note that FIG. 5 shows only the second terminal 30 and the sensor 20 in one installation location L1, but the management system 1 transmits request signals to all the sensors 20 as the management targets and acquires pieces of sensor information from all the sensors 20 as the management targets.

As described above, the acquirer 111 of the management system 1 performs an acquisition process of acquiring the pieces of sensor information from the plurality of sensors 20 installed in the plurality of installation locations L1 each time the period T1 elapses. The acquirer 111 of the management system 1 stores, in the storage 13, the pieces of sensor information acquired from the plurality of sensors 20 in association with the pieces of identification information and the pieces of location information.

Thereafter, when a person in charge (e.g., a person in charge who performs maintenance work on the detector 20) of the business operator B1 using the first terminal 50, which is an output destination terminal, wants to know the operation mode of the detector 20 as the management target, the person in charge gives, to the operating unit 54 of the first terminal 50, an operation of requesting transmission of sensor information (S9). The controller 51 of the first terminal 50 transmits, based on a signal input from the operating unit 54 in response to the operation given by the person in charge, a transmission request signal for requesting transmission of the sensor information and the identification information of the first terminal 50 from the transceiver 52 via the communication network N1 to the management system 1 (S10). When the transceiver 12 of the management system 1 receives the transmission request signal and the identification information transmitted from the first terminal 50, the outputter 114 of the management system 1 extracts, from the pieces of sensor information stored in the storage 55, one or more pieces of output target sensor information in accordance with the first terminal 50 which is the output destination terminal. In this embodiment, the output destination terminal is the first terminal 50 used by a person in charge who performs the maintenance work, and therefore, the outputter 114 extracts, as the pieces of the output target sensor information, the first information and the second information each of which is the maintenance-related information included in the pieces of sensor information. The outputter 114 outputs, from the transceiver 12 to the first terminal 50 as a request source, information in which the pieces of output target sensor information, which include the first information and the second information, are associated with the identification information and the location information of the sensor 20 from which the pieces of output target sensor information are acquired (S11). The information output from the outputter 114 is transmitted via the communication network N1 to the first terminal 50 (S12) and is received by the transceiver 52 of the first terminal 50. When the transceiver 52 of the first terminal 50 receives the information transmitted from the management system 1, the controller 51 displays the information thus received by the transceiver 52 on the display unit 53 (S13). Thus, the person in charge of the business operator B1 which uses the first terminal 50 can verify the operational mode of the sensor 20 as the management target based on the information displayed on the display unit 53 of the first terminal 50. In the present embodiment, the person in charge of the business operator B1 which uses the first terminal 50 can verify the second information in addition to the first information, and therefore, the person in charge can perform, based on signs of an abnormality, a process of preventing the occurrence of the abnormality or a process of preparing for the occurrence of the abnormality before the abnormality occurs.

In contrast, when a user (e.g., a facility user who uses the installation location L1 of the sensor 20) of the second terminal 30, which is an output destination terminal, wants to know the operational mode of the sensor 20 installed in the same installation location L1 as the second terminal 30, the user gives, to the operating unit 35 of the second terminal 3, an operation for requesting transmission of sensor information. The controller 31 of the second terminal 30 transmits, based on a signal input from the operating unit 35 in response to the operation given by the facility user, a transmission request signal for requesting transmission of the sensor information and the identification information of the second terminal 30 from the second transceiver 33 via the communication network N1 to the management system 1.

When the transceiver 12 of the management system 1 receives the transmission request signal and the identification information transmitted from the second terminal 30, the outputter 114 of the management system 1 extracts, from the pieces of sensor information stored in the storage 55, one or more pieces of output target sensor information in accordance with the second terminal 30 which is the output destination terminal. In this embodiment, the output destination terminal is the second terminal 30 in the installation location L1 in which the sensor 20 is installed, and therefore, the outputter 114 extracts, as a piece of output target sensor information, the sensor information regarding the sensor 20 in the same installation location L1 as the second terminal 30 as a request source. Specifically, the outputter 114 extracts, as a piece of output target sensor information, only the first information of the pieces of sensor information (maintenance-related information) of the sensor 20 in the same installation location L1 as the second terminal 30 as the request source. That is, the second information of the pieces of sensor information (maintenance-related information) of the sensor 20 is information which is meaningless for, and cannot be used by, the facility user. Thus, the outputter 114 outputs, to the second terminal 30, only the first information indicating whether or not an abnormality is present in the sensor 20 as the piece of output target sensor information.

The outputter 114 outputs, from the transceiver 12 to the second terminal 30 as the request source, information in which the pieces of output target sensor information extracted from the pieces of sensor information of the sensor 20 in the same installation location L1 as the second terminal 30 as the request source is associated with the identification information and the location information of the sensor 20. The information output from the outputter 114 is transmitted via the communication network N1 to the second terminal 30 and is received by the second transceiver 33 of the second terminal 30. When the second transceiver 33 of the second terminal 30 receives the information transmitted from the management system 1, the controller 31 displays the information thus received by the second transceiver 33 on the display unit 34. Thus, the facility user who uses the second terminal 30 can verify, based on the information (the pieces of sensor information, the identification information, and the location information) displayed on the display unit 34 of the second terminal 30, the operational mode of the sensor 20 in the same installation location L1 as the second terminal 30. In this embodiment, the piece of sensor information (first information) output from the outputter 114 to the second terminal 30 is information indicating, for example, exhaustion of the battery 25. Thus, the facility user who uses the second terminal 30 can verify, based on the first information, the abnormality in the sensor 20 in the installation location L1 used by the facility user.

Thus, in the management system 1 of the present embodiment, the outputter 114 selects, from the pieces of sensor information acquired from the plurality of sensors 20 by the acquirer 111, at least one piece of output target sensor information in accordance with the output destination terminal, and therefore, the outputter 114 can output the at least one piece of sensor information selected in accordance with the output destination terminal. For example, the outputter 114 does not output the second information relating to signs of an abnormality to the second terminal 30 installed in the same installation location L1 as the sensor 20, but the outputter 114 outputs the first information indicating whether or not the abnormality is present. In contrast, the outputter 114 outputs the first information and the second information regarding signs of the abnormality to the first terminal 50 provided to the business operator B1, and therefore, the person in charge of the business operator B1 which uses the first terminal 50 can grasp the signs of the abnormality in the sensor 20. Thus, the person in charge of the business operator B1 can, based on the signs of the abnormality in the sensor 20, perform maintenance work on the sensor 20 or propose replacement of the sensor 20 before the occurrence of the abnormality. Note that the respective pieces of sensor information output from the outputter 114 to the first terminal 50 and the second terminal 30 are mere examples and may accordingly be modified.

In the present embodiment, the outputter 114 may output information listing the pieces of output target sensor information and at least one of the identification information or the location information to the output destination terminal (the first terminal 50). In the present embodiment, the outputter 114 outputs information listing the pieces of output target sensor information selected based on a prescribed extraction condition, the identification information, and the location information to the output destination terminal (the first terminal 50).

For example, the outputter 114 extracts, as the piece of output target sensor information, the sensor information of only the sensor 20 as a target of the maintenance service provided by the business operator B1 including the first terminal 50 which is the output destination terminal from the pieces of sensor information acquired from the plurality of sensors 20 by the acquirer 111. Then, the outputter 114 outputs, to the first terminal 50, information listing the piece of output target sensor information, and the identification information and the location information of the sensor 20 from which the piece of output target sensor information is acquired. Thus, the person in charge of the business operator B1 which uses the first terminal 50 can easily verify the sensor information, the identification information, and the location information of the sensor 20 which is the target of the maintenance service. Moreover, the person in charge of the business operator B1 which uses the first terminal 50 can identify, based on the identification information and the location information associated with the piece of output target sensor information, the sensor 20 from which the piece of output target sensor information is acquired.

Alternatively, the outputter 114 may extract, as the piece of output target sensor information, the sensor information of a sensor 20 in a specific installation location L1 (e.g., an installation location L1 which the person in charge of the business operator B1 is to visit) from the pieces of sensor information acquired from the plurality of sensors 20 by the acquirer 111. The outputter 114 outputs, to the first terminal 50, information listing the piece of output target sensor information, and the identification information and the location information of the sensor 20 from which the piece of output target sensor information is acquired. Thus, the person in charge of the business operator B1 which uses the first terminal 50 can verify the sensor information of the sensor 20 in the installation location L1 as a destination to visit and can then visit the installation location L1, so that the person in charge can smoothly perform the maintenance work and the like of the sensor 20. Note that the specific installation location L1 is not limited to one installation location L1 but may include a plurality of installation locations L1.

Still alternatively, the outputter 114 may extract, as the piece of output target sensor information, the sensor information of a sensor 20 in which an abnormality is present from the pieces of sensor information acquired from the plurality of sensors 20 by the acquirer 111. The outputter 114 outputs, to the first terminal 50, information listing the piece of output target sensor information, and the identification information and the location information of the sensor 20 from which the piece of output target sensor information is acquired. Thus, the person in charge of the business operator B1 which uses the first terminal 50 can easily verify the sensor 20 in which the abnormality is present and to identify, based on the identification information and the location information, the sensor 20 in which the abnormality is present, and therefore, the person in charge can smoothly take a countermeasure against the abnormality in the sensor 20.

Yet alternatively, the outputter 114 may extract, as the piece of output target sensor information, the sensor information of a sensor 20 belonging to the kind of an extraction target from the pieces of sensor information acquired from the plurality of sensors 20 by the acquirer 111. The outputter 114 outputs, to the first terminal 50, information listing the piece of output target sensor information, and the identification information and the location information of the sensor 20 from which the piece of output target sensor information is acquired. Thus, the person in charge of the business operator B1 which uses the first terminal 50 can easily verify the operation mode of the sensor 20 belonging to the kind of the extraction target. Moreover, the person in charge of the business operator B1 which uses the first terminal 50 can easily identify, based on the identification information and the location information associated with the piece of output target sensor information, the installation location L1 and the like of the sensor 20 belonging to the kind of the extraction target.

Moreover, the outputter 114 may output, to the output destination terminal, the at least one output target sensor information in association with information regarding a priority degree determined by the determiner 112. In this case, the outputter 114 may set a priority degree for the at least one output target sensor information based on the contents of sensor information. For example, when the sensor information is the maintenance-related information, the outputter 114 at least sets the priority degree based on the contents and the urgency of maintenance and/or inspection to be performed on the sensor 20. In the present embodiment, when the outputter 114 outputs the pieces of output target sensor information to the first terminal 50 (the output destination terminal) used by the person in charge of the business operator B1, the outputter 114 outputs information in which the information regarding the priority degree is associated with the pieces of output target sensor information. Thus, the person in charge of the business operator B1 can easily determine, based on the information regarding the priority degree included in the information input to the first terminal 50, the sensor 20 for which a countermeasure should be taken on a priority basis.

Further, the outputter 114 may output, to the output destination terminal, the at least one output target sensor information in association with information regarding the countermeasure time period set by the time period setter 113. In this embodiment, the time period setter 113 at least sets the countermeasure time period for the at least one output target sensor information based on the content of sensor information. When the sensor information is the maintenance-related information, the time period setter 113 at least sets the countermeasure time period based on the final deadline or the like of, for example, maintenance and/or inspection to be performed on the sensor 20. In the present embodiment, when the outputter 114 outputs the pieces of output target sensor information to the first terminal 50 (the output destination terminal) used by the person in charge of the business operator B1, the outputter 114 outputs information in which the information regarding the countermeasure time period is associated with the pieces of output target sensor information. Thus, the person in charge of the business operator B1 can perform, based on the information regarding the countermeasure time period and included in the information input to the first terminal 50, a process on the sensor 20 within the countermeasure time period thus indicated.

Furthermore, in the present embodiment, the acquirer 111 acquires, from the electric apparatus 40 in the same installation location L1 as the second terminal 30, apparatus information regarding the operational mode of the electric apparatus 40 via the second terminal 30 serving as the relay. For example, the acquirer 111 regularly transmits, from the transceiver 12 to the electric apparatus 40, a request signal for requesting transmission of the apparatus information. When the electric apparatus 40 receives, via the second terminal 30, the request signal transmitted from the management system 1, the electric apparatus 40 transmits the apparatus information regarding the operational mode of the electric apparatus 40 via the second terminal 30 to the management system 1. Thus, the management system 1 can regularly acquire the apparatus information of the electric apparatus 40. Note that the acquirer 111 may transmit, to the electric apparatus 40, a request signal for requesting transmission of the apparatus information by using the occurrence of a prescribed event as a trigger, and the acquirer 111 can acquire the apparatus information at arbitrary timings. Here, the apparatus information includes at least one of information regarding the total hours of use of the electric apparatus 40, information indicating whether or not an abnormality is present in the electric apparatus 40, or information regarding signs of the abnormality which may occur in the electric apparatus 40.

Then, the outputter 114 outputs the apparatus information acquired by the acquirer 111 to the output destination terminal (the first terminal 50 or the second terminal 30). For example, when the transceiver 12 of the management system 1 receives the transmission request from the output destination terminal, the outputter 114 transmits, from the transceiver 12 to the output destination terminal, the apparatus information of the electric apparatus 40 selected in accordance with the output destination terminal which receives the transmission request.

For example, when the transceiver 12 of the management system 1 receives the transmission request from the first terminal 50 of the business operator B1, the outputter 114 extracts the apparatus information of the electric apparatus 40 in the same installation location L1 as the sensor 20 as a target of the maintenance service by the business operator B1, and the outputter 114 outputs the apparatus information to the first terminal 50. Thus, the person in charge of the business operator B1 can grasp the operational mode of the electric apparatus 40 in the same installation location L1 as the sensor 20 as the management target.

Moreover, when the transceiver 12 of the management system 1 receives the transmission request from the second terminal 30, the outputter 114 extracts the apparatus information of the electric apparatus 40 in the same installation location L1 as the second terminal 30, and the outputter 114 outputs the apparatus information to the second terminal 30. Thus, a facility user who uses the installation location L1 can verify the operational mode of the electric apparatus 40 installed in the installation location L1 by using the second terminal 30 installed in the installation location L1.

### (4) Variation

The embodiment described above is a mere example of various embodiments of the present disclosure. Rather, the embodiment described above may be readily modified in various manners depending on a design choice or any other factor without departing from the scope of the present disclosure. Moreover, a function similar to the management system 1 may be realized by a management method, a computer program, a non-transitory storage medium in which a program is recorded, or the like. A management method of one aspect of includes an acquisition process and an output process. The acquisition process includes acquiring, from the plurality of sensors 20 installed in the respective installation locations L1, respective pieces of sensor information regarding the operation modes thereof. The output process includes outputting at least one of the pieces of sensor information acquired in the acquisition process to a plurality of output destination terminals (the first terminal 50 and the second terminal 30). The output process includes outputting at least one output target sensor information to each of the output destination terminals (the first terminal 50 and the second terminal 30). The at least one output target sensor information includes at least one piece of sensor information selected, from the pieces of sensor information acquired in the acquisition process, for each of the output destination terminals (the first terminal 50 and the second terminal 30) in accordance with contents of the pieces of sensor information. The output process is configured to output the at least one output target sensor information in association with at least one of identification information or location information. The identification information and the location information are respectively identification information and location information regarding the installation location L1 of at least one of the sensors 20 from which the at least one output target sensor information is acquired. Moreover, a (computer) program of one aspect is a program configured to cause a computer system to execute an acquisition process and an output process.

Variations of the embodiment described above will be described below. The variations described below are applicable accordingly in combination. In the following description, the embodiment described above will be referred to as a "basic example".

The management system 1 according to the present disclosure includes a computer system. The computer system includes, as principal hardware components, a processor and memory. The functions of the management system 1 according to the present disclosure may be implemented by making the processor execute a program stored in the memory of the computer system. The program may be stored in the memory of the computer system in advance, may be provided via a telecommunications network, or may be provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). A field-programmable gate array (FPGA), which is programmable after fabrication of the LSI, or a logical device which allows reconfiguration of connections in LSI or reconfiguration of circuit cells in LSI may be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

Moreover, collecting the plurality of functions of the management system 1 in one housing is not an essential configuration of the management system 1. The components of the management system 1 may be distributed in a plurality of housings. Moreover, at least some functions of the processing system 1, for example, some functions of the acquirer 111, the determiner 112, the time period setter 113, and the outputter 114 of the management system 1 may be realized by cloud (cloud computing) or the like.

In the basic example, the business operator B1 which uses the first terminal 50 is a maintenance service business operator which provides maintenance work on the sensor 20, but the business operator B1 is not limited to the maintenance service business operator. The business operator B1 may be a house-builder, and a person in charge of the house-builder can verify, by using the first terminal 50, the operational mode of the sensor 20 or the electric apparatus 40 installed in the facility built by the house-builder. Alternatively, the business operator B1 may be a sales business operator which sells the sensors 20 or the electric apparatuses 40, and a person in charge of the sales business operator can verify, by using the first terminal 50, the operational mode of the sensor 20 or the electric apparatus 40 sold by the sales business operator. Moreover, the person in charge of the sales business operator can propose, by using the first terminal 50, for example, inspection and/or update of the sensor 20 or the electric apparatus 40.

In the basic example, the acquirer 111 sets, for each of the pieces of sensor information acquired from the plurality of sensors 20, a corresponding one of pieces of information regarding output destination terminals to which the pieces of sensor information are output based on the contents of the pieces of sensor information. Then, the outputter 114 selects at least one output target sensor information for each output destination terminal based on the pieces of information regarding the output destination terminals set by the acquirer 111. Note that the outputter 114 may select the at least one output target sensor information from the pieces of sensor information based on ID or a password used when the output destination terminal accesses the management system 1 and the contents of the pieces of sensor information.

In the basic example, the second terminal 30 installed in each installation location L1 may regularly or irregularly collect the sensor information from the sensor 20 installed in the same installation location L1 as the second terminal 30, and the second terminal 30 may accumulate the pieces of sensor information collected from the sensor 20 in the storage 36. Here, the second terminal 30 may collect pieces of sensor information of the sensor 20 set as the master and the sensor(s) 20 set as the slave from the sensor 20 set as the master or may collect pieces of sensor information from the respective sensors 20. When the second terminal 30 receives a request signal for requesting transmission of the sensor information from the management system 1, the second terminal 30 may transmit sensor information accumulated in the storage 36 to the management system 1. In this case, the acquirer 111 of the management system 1 acquires, from the second terminal 30, the sensor information collected by the second terminal 30, thereby acquiring the sensor information of each sensor 20. The acquirer 111 acquires the sensor information collected by the second terminal 30 in advance, and therefore, the acquirer 111 can acquirer the sensor information in a short period of time. Note that when the second terminal 30 receives the request signal transmitted from the management system 1, the second terminal 30 may collect the sensor information from the sensor 20 installed in the same installation location L1 as the second terminal 30, and the second terminal 30 may transmit the sensor information to the management system 1. That is, when the management system 1 transmits a request signal to the second terminal 30, the second terminal 30 at least transmits to, the management system 1, the sensor information already collected from the sensor 20 or the sensor information collected from the sensor 20 by using reception of the request signal as a trigger.

Note that the second terminal 30 installed in each installation location L1 may regularly or irregularly collect the apparatus information from the electric apparatus 40 installed in the same installation location L1 as the second terminal 30, and the second terminal 30 may accumulate the apparatus information collected from the electric apparatus 40 in the storage 36. When the second terminal 30 receives, from the management system 1, a request signal for requesting transmission of the apparatus information, the electric apparatus 40 may transmit the apparatus information accumulated in the storage 36 to the management system 1. That is, when the management system 1 transmits a request signal to the second terminal 30, the second terminal 30 at least transmits to, the management system 1, the apparatus information already collected from the electric apparatus 40 or the apparatus information collected from the electric apparatus 40 by using reception of the request signal as a trigger.

### (Summary)

As described above, a management system (1) of a first aspect includes an acquirer (111) and an outputter (112). The acquirer (111) is configured to acquire, from a plurality of sensors (20) installed in respective installation locations (L1), respective pieces of sensor information regarding operation modes of the plurality of sensors (20). The outputter (114) is configured to output at least one of the pieces of sensor information acquired by the acquirer (111) to a plurality of output destination terminals (30, 50). The outputter (114) is configured to output at least one piece of output target sensor information to each of the plurality of output destination terminals (30, 50). The at least one piece of output target sensor information includes at least one piece of sensor information selected, from the pieces of sensor information acquired by the acquirer (111), for each of the plurality of output destination terminals (30, 50) in accordance with contents of the pieces of sensor information. The outputter (112) is configured to output the at least one piece of output target sensor information in association with at least one of identification information or location information. The identification information and the location information are respectively identification information and location information regarding the installation location (L1) of at least one of the sensors (20) from which the at least one piece of output target sensor information is acquired.

With this aspect, the outputter (114) outputs the at least one piece of output target sensor information selected in accordance with each of the output destination terminals (30, 50) and at least one of the identification information or the location information to each of the plurality of output destination terminals (30, 50). This enables pieces of output target sensor information selected in accordance with the contents of the pieces of sensor information for the respective output destination terminals (30, 50) to be provided to a plurality of users who use the respective output destination terminals (30, 50). Thus, each of the plurality of users who use the plurality of output destination terminals (30, 50) can verify the operational mode of the sensor (20), and the management system (1) configured to improve usability is be provided.

In a management system (1) of a second aspect referring to the first aspect, the acquirer (111) is configured to regularly output a request signal for requesting transmission of the sensor information to each of the plurality of sensors (20).

This aspect enables the acquirer (111) to regularly acquire the sensor information from each of the plurality of sensors (20).

In a management system (1) of a third aspect referring to the first or second aspect, the outputter (114) is configured to output, to each of the plurality of output destination terminals (30, 50), information listing the at least one output target sensor information and at least one of the identification information or the location information.

With this aspect, each of a plurality of users who use the plurality of output destination terminals (30, 50) can verify the operational modes of the plurality of sensors (20) based on the information listing two or more pieces of information of the at least one output target sensor information, the identification information, and the location information.

A management system (1) of a fourth aspect referring to any one of the first to third aspects further includes a determiner (112) configured to determine a priority degree of each of the pieces of sensor information acquired by the acquirer (111). The outputter (114) is configured to output the at least one output target sensor information to each of the plurality of output destination terminals (30, 50). Information regarding the priority degree is associated with the at least one output target sensor information.

With this aspect, the information regarding the priority degree is associated with the at least one output target sensor information, and therefore, this aspect provides the advantage that each of the plurality of users who use the plurality of output destination terminals (30,50) easily verifies the operational modes of the plurality of sensors (20).

A management system (1) of a fifth aspect referring to any one of the first to fourth aspects further includes a time period setter (113) configured to set a countermeasure time period for each of the pieces of sensor information acquired by the acquirer (111). The outputter (114) is configured to output the at least one output target sensor information to each of the plurality of output destination terminals (30, 50), information regarding the countermeasure time period being associated with the at least one output target sensor information.

With this aspect, the information regarding the countermeasure time period is associated with the at least one output target sensor information, and therefore, each of the plurality of users who use the plurality of output destination terminals (30, 50) easily verify the time period for taking an action relating to the at least one output target sensor information.

A management system (1) of a sixth aspect referring to any one of the first to fifth aspects further includes the acquirer (111) is configured to acquire, from at least one sensor (20) of the plurality of sensors (20), at least one of the pieces of sensor information via a relay (30).

This aspect enables the acquirer (111) to acquire the sensor information from the sensor (20) via the relay (30).

In a management system (1) of a seventh aspect referring to the sixth aspect, the acquirer (111) is configured to acquire apparatus information regarding an operational mode of an electric apparatus (40) via the relay (30) from the electric apparatuses (40) other than the plurality of sensors (20). The outputter (114) is configured to output the apparatus information acquired by the acquirer (111) to at least one of the plurality of output destination terminals (30, 50).

With this aspect, each of the plurality of users who use the plurality of output destination terminals (30, 50) can verify, by using a corresponding one of the output destination terminals (30, 50), the apparatus information acquired from the electric apparatus (40) by the acquirer (111).

A management system (1) of an eighth aspect referring to any one of the first to seventh aspects, wherein each of the pieces of sensor information includes information to be used for maintenance work to be performed on a corresponding one of the sensors (20).

With this aspect, the user of the output destination terminal (50) can use the information included in the sensor information for the maintenance work.

A management method of a ninth aspect of includes an acquisition process and an output process. The acquisition process includes acquiring, from a plurality of sensors (20) installed in respective installation locations (LI), respective pieces of sensor information regarding operation modes of the plurality of sensors (20). The output process includes outputting at least one of the pieces of sensor information acquired in the acquisition process to a plurality of output destination terminals (30, 50). The output process includes outputting at least one piece of output target sensor information to each of the plurality of output destination terminals (30, 50). The at least one piece of output target sensor information includes at least one piece of sensor information selected, from the pieces of sensor information acquired in the acquisition process, for each of the plurality of output destination terminals (30, 50) in accordance with contents of the pieces of sensor information. The output process is configured to output the at least one piece of output target sensor information in association with at least one of identification information or location information. The identification information and the location information are respectively identification information and location information regarding the installation location (L1) of at least one of the sensors (20) from which the at least one piece of output target sensor information is acquired.

With this aspect, the outputter (114) outputs the at least one piece of output target sensor information selected in accordance with each of the output destination terminals (30, 50) and at least one of the identification information or the location information to each of the plurality of output destination terminals (30, 50). This enables pieces of output target sensor information selected in accordance with the contents of the pieces of sensor information for the respective output destination terminals (30, 50) to be provided to a plurality of users who use the respective output destination terminals (30, 50). Thus, each of the plurality of users who use the plurality of output destination terminals (30, 50) can verify the operational mode of the sensor (20), and the management method can improve the usability of the sensor (20).

A program of a tenth aspect is a program configured to cause a computer system to execute an acquisition process and an output process. The acquisition process includes acquiring, from a plurality of sensors (20) installed in respective installation locations (LI), respective pieces of sensor information regarding operation modes of the plurality of sensors (20). The output process includes outputting at least one of the pieces of sensor information acquired in the acquisition process to a plurality of output destination terminals (30, 50). The output process includes outputting at least one piece of output target sensor information to each of the plurality of output destination terminals (30, 50). The at least one piece of output target sensor information includes at least one piece of sensor information selected, from the pieces of sensor information acquired in the acquisition process, for each of the plurality of output destination terminals (30, 50) in accordance with contents of the pieces of sensor information. The output process is configured to output the at least one piece of output target sensor information in association with at least one of identification information or location information. The identification information and the location information are respectively identification information and location information regarding the installation location (LI) of at least one of the sensors (20) from which the at least one piece of output target sensor information is acquired.

With this aspect, the outputter (114) outputs the at least one piece of output target sensor information selected in accordance with each of the output destination terminals (30, 50) and at least one of the identification information or the location information to each of the plurality of output destination terminals (30, 50). This enables pieces of output target sensor information selected in accordance with the contents of the pieces of sensor information for the respective output destination terminals (30, 50) to be provided to a plurality of users who use the respective output destination terminals (30, 50). Thus, each of the plurality of users who use the plurality of output destination terminals (30, 50) can verify the operational mode of the sensor (20), and a program configured to improve the usability of the management system (1) is provided.

The aspects should not be construed as limiting, but various configurations (including variations) of the management system (1) of the embodiment may be embodied by, for example, a management method, a (computer) program, or a non-transitory recording medium in which a program is stored.

The configurations according to the second to eighth aspects are not configurations essential for the management system (1) and may thus be accordingly omitted.

### Reference Signs List

- 1: MANAGEMENT SYSTEM
- 20: SENSOR
- 30: SECOND TERMINAL (OUTPUT DESTINATION TERMINAL, RELAY)
- 40: ELECTRIC APPARATUS
- 50: FIRST TERMINAL (OUTPUT DESTINATION TERMINAL)
- 111: ACQUIRER
- 112: DETERMINER
- 113: TIME PERIOD SETTER
- 114: OUTPUTTER
- L1: INSTALLATION LOCATION

## Claims

1. A management system, comprising:
an acquirer configured to acquire, from a plurality of sensors installed in respective installation locations, respective pieces of sensor information regarding operation modes of the plurality of sensors; and
an outputter configured to output at least one of the pieces of sensor information acquired by the acquirer to each of a plurality of output destination terminals,
the outputter being configured to output at least one piece of output target sensor information to each of the plurality of output destination terminals, the at least one piece of output target sensor information including at least one piece of sensor information selected, from the pieces of sensor information acquired by the acquirer, for each of the plurality of output destination terminals in accordance with contents of the pieces of sensor information, the outputter being configured to output the at least one piece of output target sensor information in association with at least one of identification information or location information regarding the installation location of at least one of the sensors from which the at least one piece of output target sensor information is acquired.

2. The management system of claim 1, wherein
the acquirer is configured to regularly output a request signal for requesting transmission of the sensor information to each of the plurality of sensors.

3. The management system of claim 1 or 2, wherein
the outputter is configured to output, to each of the output destination terminals, information listing the at least one output target sensor information and at least one of the identification information or the location information.

4. The management system of any one of claims 1 to 3, further comprising a determiner configured to determine a priority degree of each of the pieces of sensor information acquired by the acquirer, wherein
the outputter is configured to output the at least one output target sensor information to each of the plurality of output destination terminals, information regarding the priority degree being associated with the at least one output target sensor information.

5. The management system of any one of claims 1 to 4, further comprising a time period setter configured to set a countermeasure time period for each of the pieces of sensor information acquired by the acquirer, wherein
the outputter is configured to output the at least one output target sensor information to each of the plurality of output destination terminals, information regarding the countermeasure time period being associated with the at least one output target sensor information.

6. The management system of any one of claims 1 to 5, wherein
the acquirer is configured to acquire, from at least one sensor of the plurality of sensors, at least one of the pieces of sensor information via a relay.

7. The management system of claim 6, wherein
the acquirer is configured to acquire apparatus information regarding an operational mode of an electric apparatus via the relay from the electric apparatus other than the plurality of sensors, and
the outputter is configured to output apparatus information acquired by the acquirer to at least one of the plurality of output destination terminals.

8. The management system of any one of claims 1 to 7, wherein
each of the pieces of sensor information includes information to be used for maintenance work to be performed on a corresponding one of the sensors.

9. A management method, comprising:
an acquisition process of acquiring, from a plurality of sensors installed in respective installation locations, respective pieces of sensor information regarding operation modes of the plurality of sensors; and
an output process of outputting at least one of the pieces of sensor information acquired in the acquisition process to a plurality of output destination terminals,
the output process including outputting at least one piece of output target sensor information to each of the plurality of output destination terminals, the at least one piece of output target sensor information including at least one piece of sensor information selected, from the pieces of sensor information acquired in the acquisition process, for each of the plurality of output destination terminals in accordance with contents of the pieces of sensor information, the output process being configured to output the at least one piece of output target sensor information in association with at least one of identification information or location information regarding the installation location of at least one of the sensors from which the at least one piece of output target sensor information is acquired.

10. A program configured to cause a computer system to execute
an acquisition process of acquiring, from a plurality of sensors installed in respective installation locations, respective pieces of sensor information regarding operation modes of a plurality of sensors installed in respective installation locations; and
an output process of outputting at least one of the pieces of sensor information acquired in the acquisition process to a plurality of output destination terminals,
the output process including outputting at least one piece of output target sensor information to each of the plurality of output destination terminals, the at least one piece of output target sensor information including at least one piece of sensor information selected, from the pieces of sensor information acquired in the acquisition process, for each of the plurality of output destination terminals in accordance with contents of the pieces of sensor information, the output process being configured to output the at least one piece of output target sensor information in association with at least one of identification information or location information regarding the installation location of at least one of the sensors from which the at least one piece of output target sensor information is acquired.
